# EUROPEAN PATENT APPLICATION

(11) **EP 0 605 954 A2**
(43) Date of publication of application: **13.07.1994**
(21) Application number: 93309383.3
(22) Date of filing: 24.11.1993
(51) Int. Cl.: H04B 1/40

(54) **Transmitter/receiver arrangements**

(30) Priority: 08.01.1993 GB 9300280
(71) Applicant: PLESSEY SEMICONDUCTORS LIMITED, Swindon, Wiltshire SN2 2QW (GB)
(72) Inventor: Williams, Anthony David, Bleasby Moor, Lincolnshire LN8 3QL (GB)
(74) Representative: Hoste, Colin Francis

(57) **Abstract**

In a half duplex transmitter/receiver arrangement in which received signals are down-converted to an IF frequency for amplification, signals for transmission are modulated onto a carrier at a frequency of twice the IF frequency and this carrier is only frequency-divided to IF for up-conversion when transmission is to take place.

## Description

The present invention relates to transmitter/receiver arrangements, and in particular although not exclusively to microwave transmitter/receiver, or transceiver, arrangements.

According to one aspect of the present invention a transmitter/receiver arrangement in which received signals are down-converted in frequency for amplification at an intermediate frequency and intermediate frequency signals to be transmitted are up-converted in frequency before transmission, is characterised in that information signals to be transmitted are arranged to be modulated onto a carrier signal of a frequency which is a multiple of said intermediate frequency, and the modulated carrier is arranged to be divided in frequency by said multiple before up-conversion.

The down-conversion of received signals and the up-conversion of intermediate frequency signals to be transmitted may utilise a common local oscillator.

According to another aspect of the present invention a transmitter/receiver arrangement comprises first mixer means for down-converting received signals to an intermediate frequency, second mixer means for up-converting signals at said intermediate frequency for transmission, characterised in that there are provided means to modulate information signals to be transmitted onto a carrier signal of a frequency which is a multiple of said intermediate frequency, and means selectively to frequency divide the modulated carrier signal by said multiple for application to said second mixer means at said intermediate frequency.

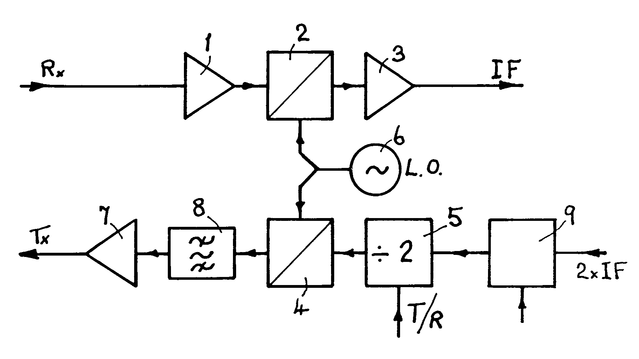

A transmitter/receiver arrangement in accordance with the present invention will now be described with reference to the accompanying drawing, which shows part of a transmitter/receiver arrangement schematically.

Referring to the drawing received signals are applied by way of an RF amplifier 1 to a first mixer or down-converter 2, from which signals at an intermediate frequency are applied by way of an IF amplifier 3 to the output circuits of the arrangement (not shown).

Information signals to be transmitted are first modulated onto a carrier signal at a frequency of twice the intermediate frequency in a modulator 9, the modulated carrier signal being applied to a second mixer or up-converter 4 by way of a switchable divide-by-two frequency divider 5. The mixers 2 and 4 utilise a common local oscillator 6. After up-conversion signals for transmission are applied to an RF amplifier 7 by way of a band-pass filter 8.

The arrangement operates in half-duplex, with the frequency divider 5 biased off or de-energised in receive mode so that signals at IF are not produced in the transmit path and received signals may be down-converted and amplified by the IF amplifier 3 without interference from the transmit path, any signals at 2 x IF being rejected by IF filters associated with the amplifier 3. In transmit mode, when the frequency divide 5 is producing signals at the intermediate frequency, the receive path may in turn be disabled (not shown).

## Claims

1. A transmitter/receiver arrangement in which received signals are down-converted in frequency (2) for amplification (3) at an intermediate frequency and intermediate frequency signals to be transmitted are up-converted in frequency (4) before transmission, characterised in that information signals to be transmitted are arranged to be modulated onto a carrier signal of a frequency which is a multiple of said intermediate frequency, and the modulated carrier is arranged to be divided in frequency (5) by said multiple before up-conversion.

2. A transmitter/receiver arrangement in accordance with Claim 1 wherein the down-conversion of received signals and the up-conversion of intermediate frequency signals to be transmitted utilise a common local oscillator (6).

3. A transmitter/receiver arrangement comprising first mixer means (2) for down-converting received signals to an intermediate frequency, second mixer means (4) for up-converting signals at said intermediate frequency for transmission, characterised in that there are provided means (9) to modulate information signals to be transmitted onto a carrier signal of a frequency which is a multiple of said intermediate frequency, and means (5) selectively to frequency divide the modulated carrier signal by said multiple for application to said second mixer means (4) at said intermediate frequency.
